Europäisches Patentamt

European Patent Office

Office européen des brevets

(19)

(11) Numéro de publication: **0 541 527 B1**

(12) **FASCICULE DE BREVET EUROPEEN**

(45) Date de publication du fascicule du brevet: **23.08.95**

(51) Int. Cl.⁶: **C08L 23/02**, C08L 101/02, //(C08L23/02,101:02), (C08L101/02,23:02)

(21) Numéro de dépôt: **90906241.6**

(22) Date de dépôt: **23.03.90**

(86) Numéro de dépôt internationale : **PCT/FR90/00201**

(87) Numéro de publication internationale : **WO 90/11326 (04.10.90 90/23)**

(54) **MELANGES DE POLYMERES THERMOPLASTIOUES PRESENTANT UNE PERMEABILITE REDUITE AUX HYDROCARBURES.**

(30) Priorité: **24.03.89 FR 8904045**

(43) Date de publication de la demande: **19.05.93 Bulletin 93/20**

(45) Mention de la délivrance du brevet: **23.08.95 Bulletin 95/34**

(84) Etats contractants désignés: **BE DE ES GB IT NL**

(56) Documents cités:
**EP-A- 326 775**
**EP-A- 0 015 556**
**EP-A- 0 177 762**
**US-A- 3 975 463**

(73) Titulaire: **INSTITUT FRANCAIS DU PETROLE**
**4, avenue de Bois Préau**
**F-92502 Rueil-Malmaison (FR)**

(72) Inventeur: **SERPE, Gaêtan**
**2, allée de la Cascade**
**F-92500 Rueil-Malmaison (FR)**
Inventeur: **JARRIN, Jacques**
**5, rue de Stalingrad**
**F-92000 Nanterre (FR)**
Inventeur: **ROCHER, Joel**
**17, rue Michelet**
**F-92500 Rueil-Malmaison (FR)**
Inventeur: **BERGAULT, Anne-Marie**
**16, avenue Bocquet**
**F-92700 Colombes (FR)**

(74) Mandataire: **Andreeff, François**
**INSTITUT FRANCAIS DU PETROLE**
**4, avenue de Bois-Préau**
**F-92502 Rueil-Malmaison (FR)**

## Description

L'invention est relative à une composition constituée d'une polyoléfine et d'un polymère oxygéné incompatible associés à un terpolymère, permettant la fabrication, dans des matériels de transformation conventionnels, de tubes ou de récipients présentant une perméabilité réduite vis-à-vis des hydrocarbures liquides ou gazeux.

Le problème de la perméabilité aux hydrocarbures liquides ou gazeux d'objets manufacturés à base de polyoléfines a été abordé de diverses façons. On connait les procédés de chlorosulfonation, oxyfluoration ou fluoration de la surface des récipients (US-A-4142032) ; ceux-ci d'une mise en oeuvre délicate (emploi d'acide fluorhydrique à l'état gazeux), ne semblent conférer qu'une réduction temporaire de la perméabilité. En effet, lors de la déformation, de l'usure ou du gonflement par l'hydrocarbure, la surface du récipient peut être altérée et l'efficacité du traitement décroit rapidement (Journal of Applied Polymer Science, Vol 30, 1407-1418 (1985)).

On connait également les procédés de co-extrusion consistant à associer dans une même paroi d'objet des couches de différents matériaux aux caractéristiques différentes, par exemple un polyéthylène ou un polyamide d'une part et un copolymère éthylène-alcool vinylique (Copo EVOH) d'autre part. L'adhérence nécessaire entre les deux couches est alors assurée par un copolymère à base d'éthylène et de monomères portant des groupements acide, ester ou anhydride. (demande de brevet EP-A-0177762).

Cette technique, efficace du point de vue de la perméabilité, présente l'inconvénient de nécessiter des investissements importants puisque deux ou trois extrudeuses sont nécessaires pour alimenter une filière spéciale de co-extrusion en chacun des polymères à l'état fondu. De plus, la morphologie de l'objet, si elle est effectivement très efficace du point de vue de la perméabilité, pose quelques problèmes en particulier de soudage ou collage (assemblage, réparation,...) de structures coextrudées entre elles, de délaminage, toujours possibles et de propriétés mécaniques en traction limitées par le polymère le moins performant.

Le problème du coût de mise en oeuvre des structures co-extrudées peut être résolu en mettant en oeuvre un mélange de polymères dans les conditions définies par le brevet US-A-3975463. Dans ce cas, la structure multicouches continues est générée dans une seule extrudeuse en ajustant les viscosités des polymères de base et la composition du copolymère assurant la cohésion à l'interface entre les couches continues dans le plan de la paroi de l'objet. Ce type de morphologie reste cependant grossière, puisque l'épaisseur des couches imperméables continues en copolymère éthylène-acétate de vinyle saponifié (copolymère EVOH) est visible sous un grossissement de l'ordre de 100. Ces morphologies conservent donc les inconvénients des objets fabriqués en co-extrusion à savoir : difficultés de collage des objets, possibilité de délaminage sous sollicitations répétées en flexion, élasticité en traction limitée du fait de la continuité de la couche imperméabilisante en copolymère EVOH relativement rigide.

Pour pallier ces inconvénients, on peut également disperser, à l'état fondu, une polyoléfine et un polyamide en présence d'un copolymère à base d'éthylène et d'acide acrylique ou méthacrylique, comme décrit par exemple dans US-A-3373222.

De tels copolymères améliorent la dispersion de la phase polyamide dans une matrice polyoléfinique (notamment de polyéthylène) et conduisent à des mélanges dont la perméabilité est inférieure à celle de la matrice et dont les propriétés mécaniques sont supérieures à celles des mélanges polyéthylène-polyamide préparés en l'absence de copolymère éthylène-acrylique (ou méthacrylique). Les procédés de mise en oeuvre des compositions ainsi constituées sont l'extrusion ou l'extrusion-soufflage. Dans ces conditions, on n'observe pas de particules de polyamide présentant une orientation particulière en microscopie optique (grossissement 100).

On connait également la demande de brevet EP-A-0015556 décrivant un procédé de fabrication d'objets ayant une structure lamellaire dispersée avec des compositions contenant une polyoléfine, un second polymère de type polyamide incompatible avec la polyoléfine et un copolymère d'éthylène contenant des groupements acides, anhydrides ou esters, soit dans la chaîne principale, soit sous forme de greffons (de chaînons pendants). Dans ce cas, le mélange est décrit comme hétérogène avec une phase continue polyoléfinique et une phase dispersée polyamide sous forme de lamelles orientées dans le plan de la paroi de l'objet ; et dont la longueur moyenne mesurée dans le plan de la paroi de l'objet est grande par rapport à l'épaisseur de celui-ci.

Cette orientation est obtenue par un étirement relativement important (100 à 500 %) dans deux directions de l'espace, de la phase polymère à chaud, suivi d'une trempe. L'épaisseur des lamelles de polyamide ainsi obtenues est comprise entre 0,5 et 50 $10^{-6}$ mètre (voir aussi EP-A- 0095349 et EP-A-0090554).

Ce type de morphologie se différencie des structures multicouches obtenues par co-extrusion par le fait que les couches de polymères imperméables ne sont plus continues mais discontinues.

Dans ce type de composition, l'agent utilisé pour améliorer les propriétés mécaniques du mélange obtenu est généralement un copolymère d'éthylène et d'acide organique de type acide fumarique ou adipique (voir EP-A-0095349, 0090554 et 0015556), ainsi que d'acide acrylique ou d'annydride maléïque (voir aussi US-A-3373222, 3373223, 3373224 et 4444817).

On connait également des compositions de polyamide associé à des copolymères ou terpolymères à base d'éthylène, d'ester acrylique ou méthacrylique et d'acide acrylique ou méthacrylique ou d'anhydride maléïque. La présence des copolymères ou terpolymères dispersés sous forme nodulaire dans une phase continue polyamide confère à cette dernière une résistance à l'impact améliorée (DE-A-2551023).

Le même principe peut s'appliquer aux copolymères EVOH tels que décrits dans la demande de brevet EP-A-0177762 et permettre d'améliorer la résistance aux chocs d'un objet multicouches réalisé par co-extrusion d'un copolymère EVOH mélangé à un copolymère ou terpolymère et d'une polyoléfine. La structure de l'objet reste alors de type multicouche et présente les inconvénients déjà cités pour ce type de morphologie (faible capacité de déformation élastique, délaminage possible, etc).

Les références précédentes, représentatives de l'état actuel des développements dans le domaine industriel des alliages de résines thermoplastiques en général et des mélanges polyéthylène-polyamide en particulier, font apparaitre l'intérêt de l'utilisation de copolymères, c'est-à-dire de polymères composés de deux monomères différents, comme agent favorisant l'adhérence entre les deux phases constituées des deux polymères incompatibles, les terpolymères étant utilisés comme additifs polymères dispersés sous forme de nodules constituant une phase moins rigide que la phase continue et lui conférant une meilleure résistance aux chocs. Dans ce cas, les fonctions acides ou anhydrides favorisent l'adhérence de la phase dispersée sur la phase continue et les comonomères ester acrylique, méthacrylique ou acétate de vinyle associés à la polyoléfine permettent de diminuer sa rigidité et d'augmenter sa capacité à absorber les chocs.

On a maintenant découvert, de manière surprenante, que l'incorporation de certains terpolymères, c'est-à-dire de polymères composés de trois monomères différents, dans des alliages de polymères incompatibles permettait d'obtenir un état de dispersion fin en même temps qu'une amélioration sensible des propriétés physico-chimiques de la composition obtenue, par comparaison d'une part avec les mélanges binaire et d'autre part avec les mélanges en présence de copolymère. Un autre avantage des compositions de l'invention est de permettre une grande souplesse dans les conditions de mise en oeuvre et de mise en forme, dans une gamme étendue de composition.

Les compositions de l'invention peuvent être définies d'une manière générale en ce qu'elles comprennent au moins une polyoléfine et au moins un polymère oxygéné incompatible choisi parmi les polyamides, les copolyamides, les alcools polyvinyliques et les copolymères éthylène-alcool vinylique, associés à une proportion mineure d'au moins un terpolymère comprenant de 64 à 94 % en poids de motifs dérivant de l'éthylène, de 5 à 35 % en poids de motifs dérivant d'au moins un ester d'acide acrylique ou méthacrylique et de 1 à 5 % en poids de motifs dérivant de l'anhydride maléique.

Les polyoléfines considérées dans les compositions de l'invention consistent en général en des polyéthylènes, polypropylènes, polybutylènes ou des copolymères de ces matériaux. On préfère, le plus souvent, utiliser des polyéthylènes ou des copolymères d'éthylène constitués de 90%, au moins, de motifs éthylène et de 10%, au plus, de motifs dérivant d'au moins une oléfine en $C_3$ à $C_8$. Les densités des polyoléfines considérées sont comprises entre 0,90 et 0,97 et les indices de fusion mesurés selon ASTM D 1238 sont compris entre 0,2 (mesurés sous 1,96 kg à 190°C). On préfère utiliser les polyéthylènes.

Les polyamides et copolyamides considérés sont obtenus par des réactions bien connues d'un diacide sur une diamine ou d'un aminoacide ou d'un lactame sur lui-même. On peut citer par exemple, comme acides carboxyliques, les acides adipique, subérique, sébacique, azélaïque, malonique, glutarique et pimélique et comme amines primaires, les tétraméthylène, pentaméthylène, hexaméthylène et octaméthylène-diamines ; comme lactames et aminoacides, on peut citer par exemple le caprolactame et l'acide amino-undécanoïque. Les polyamides considérés plus particulièrement sont par exemple, les polyamides 4 à 12 et les polyamides 6-6, 5-6, 4-10, 5-10, 6-10. On utilisera de préférence le polyamide 6 (dérivé du caprolactame) et le polyamide 11 (dérivé de l'acide amino-undécanoïque).

Les alcools polyvinyliques sont bien connus et sont obtenus par hydrolyse d'homopolymères d'acétate de vinyle. On utilisera plus particulièrement les alcools polyvinyliques dont le degré d'hydrolyse des radicaux acétate de vinyle est compris entre 80 et 99,8 %.

Les copolymères éthylène-alcool vinylique sont obtenus par hydrolyse de copolymères éthylène-acétate de vinyle. On utilisera préférentiellement des copolymères éthylène-alcool vinylique dont le pourcentage en poids d'éthylène est inférieur à 30 % et dont l'indice de fluidité défini selon la norme ASTM D-1238 est compris entre 1 et 5 (mesuré sous 1,96 kg à 190°C).

Dans les terpolymères mis en jeu dans l'invention, l'ester d'acide acrylique ou méthacrylique est plus particulièrement un ester d'alkyle inférieur, par exemple un ester d'éthyle.

Les terpolymères présentent en général une masse moléculaire en nombre de 3.000 à 50.000 et un indice de fluidité, défini par la norme ASTM D-1238, de 1 à 200.

L'adjonction selon l'invention de terpolymères à des mélanges polyoléfine-polymère oxygéné incompatible concerne plus particulièrement le cas des mélanges dont la teneur pondérale en polymère oxygéné incompatible est inférieure à la teneur pondérale en polyoléfine. Ainsi, les proportions pondérales des divers constituants des compositions de l'invention sont en général de 50 à 89,5 % de polyoléfine, de 10 à 40 % de polymère oxygéné incompatible et de 0,5 à 10 % de terpolymère. Des proportions avantageuses sont de 65 à 84,5 % pour la polyoléfine, de 15 à 30 % pour le polymère oxygéné incompatible et de 0,5 à 5 % pour le terpolymère.

Des compositions particulièrement avantageuses selon l'invention sont des mélanges polyéthylène-polyamide-terpolymère dans lesquelles le terpolymère à environ 3 % en poids d'anhydride maléïque représente de 12 à 15 % en poids par rapport au polyamide.

La mise en oeuvre des compositions de l'invention, à des températures supérieures aux points de fusion des différents constituants, par les techniques conventionnelles d'extrusion, d'extrusion-soufflage ou d'injection, conduit à des objets (par exemple tubes, conteneurs, feuilles et films) caractérisés d'une part par une très faible perméabilité aux hydrocarbures liquides ou gazeux ainsi que de bonnes propriétés mécaniques, au moins équivalentes à celles des différents mélanges décrits précédemment dans l'état de la technique, et d'autre part par une morphologie spécifique beaucoup plus finement dispersée que celles décrites dans l'art antérieur, l'intérêt de l'invention résidant dans l'association de cette morphologie finement dispersée à une forte réduction de perméabilité, ce qui n'était jamais le cas dans les techniques de l'art antérieur, où la réduction de perméabilité était due à la présence d'une phase soit continue, soit dispersée imperméable sous forme de lamelles ou de couches plus ou moins grossières et dont la plus grande dimension était grande par rapport à l'épaisseur de l'objet.

L'état de dispersion du polymère incompatible imperméable lié à l'efficacité des terpolymères selon l'invention comme agents compatibilisants et améliorant l'adhérence entre les deux phases, permet de maintenir les propriétés mécaniques de l'alliage au niveau de celles de la polyoléfine (en général le polyéthylène) servant de base à l'alliage. Cet état de dispersion peut être caractérisé par une répartition homogène de la phase incompatible dans l'épaisseur de l'objet, la dimension moyenne de la phase incompatible selon une direction perpendiculaire au plan principal de la paroi de l'objet étant de l'ordre de 0,1 à 3 $\mu$m (microns), la dimension moyenne de la phase incompatible dans le plan de la paroi de l'objet, étant de l'ordre de 0,3 à 8 $\mu$m. Par ailleurs, les perméabilités obtenues sont très faibles, par exemple de l'ordre de 20 à $1000.10^{-12}$g/cm.s pour le n-heptane à 50°C et de 3 à $200.10^{-12}$ g/cm.s pour le n-heptane à 20°C. Elles sont moins sensibles aux conditions de transformation et en particulier au taux d'étirage des objets. La technique de l'invention permet aussi d'élargir la gamme des concentrations possibles en phase imperméable sans altérer les propriétés mécaniques de l'alliage.

De plus, la dispersion importante de la phase imperméable et sa répartition sensiblement homogène dans l'épaisseur de l'objet empêche les phénomènes de délamination observables sur les mélanges contenant une phase imperméable sous forme de couches continues ou de lamelles de grandes dimensions par rapport à l'épaisseur des objets. Enfin, la technique de l'invention permet d'opérer dans une gamme de composition assez large pour inclure des compositions pour lesquelles, compte tenu des conditions de mise en oeuvre (en particulier la température), on observe une inversion de phases, la phase minoritaire (en général le polyamide) devenant la phase continue et la phase majoritaire (en général le polyéthylène) la phase dispersée.

Les exemples suivants illustrent l'invention. Certains des mélanges considérés sont examinés à titre comparatif.

Dans ces exemples, on a déterminé la perméabilité, les propriétés mécaniques et observé, pour certains d'entre eux, la morphologie des matériaux considérés sur des échantillons provenant de tubes de diamètre 45 mm et d'épaisseur comprise entre 1 et 2 millimètres extrudés sur une extrudeuse TROESTER (marque déposée) équipée d'une vis d'un diamètre D de 45 mm, de longueur 25 D et d'une filière de tube ayant un diamètre extérieur de 45 mm et une épaisseur de 3 mm.

● **Détermination de la perméabilité**

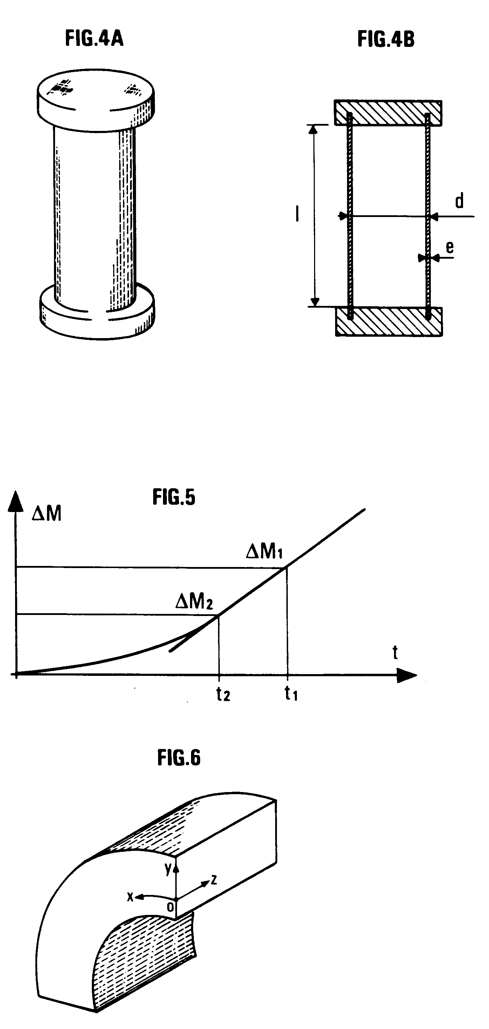

Des portions de tubes ayant une longueur d'environ 10 cm sont coupées et équipées d'embouts en résine époxy présentant une très faible perméabilité aux hydrocarbures. Un tel agencement est montré sur les figures 4A et 4B.

Avant fermeture du tube, l'épaisseur de la paroi est mesurée en 6 points au moins et 100 cm³ de n-heptane sont introduits dans le tube. L'évolution du poids des échantillons ainsi conditionnés et introduits dans une étuve à température régulée, est suivie par pesée en fonction du temps.

On trace des courbes de perte de poids (ΔM) en fonction du temps (t), qui permettent le calcul de la perméabilité de l'échantillon au n-heptane pour une température fixée. L'allure d'une de ces courbes est montrée sur la figure 5. Les perméabilités mesurées sont obtenues après 12 mois au contact du $nC_7$ à 50°C ou 20°C.

Si on désigne par e l'épaisseur du tube en cm et par S sa surface extérieure en cm² (S = $\pi$dl, d étant le diamètre en cm et l la longueur en cm du tube), la perméabilité du matériau en g/s.cm est donnée par la formule

$$P = \frac{\triangle M1 - \triangle M2}{t1 - t2} \times \frac{e}{S}$$

● **Propriétés mécaniques en traction à 20°C**

Des éprouvettes ASTM 4 sont découpées à l'emporte-pièce dans les tubes dans le sens de l'écoulement, c'est-à-dire dans l'axe du tube.

● **Examen de la morphologie**

Un simple examen visuel des matériaux formés ne permet pas de déceler la présence des hétérogénéités de structure des mélanges. Aussi, des techniques analytiques sont nécessaires pour mettre en évidence la présence d'une phase dispersée. Par analyse thermique différentielle, les pics de fusion du polyéthylène et du polyamide sont distincts et aisément identifiables (par exemple à 130 et 180°C pour le mélange particulier considéré), ce qui prouve la présence de phases séparées. L'examen structural en microscopie électronique à balayage montre un faible contraste des phases en présence ; aussi une coloration spécifique par un métal lourd est nécessaire. Dans ces conditions, l'étude morphologique en microscopie électronique en réflexion montre, sur des coupes longitudinales et transversales la structure hétérogène des produits .

## Exemple 1

Les compositions pondérales des mélanges de polymères étudiés sont données dans le tableau 1 ci-dessous, dans lequel PE et $PA_{11}$ désignent respectivement le polyéthylène et le polyamide utilisés.

Tableau 1

| Réf. | 1 | 2 | 3 | 4 |
|------|-----|-----|-----|-----|
| PE | 100 | 0 | 79 | 77 |
| $PA_{11}$ | 0 | 100 | 21 | 21 |
| Terpolymère | 0 | 0 | 0 | 2 |

Le polyéthylène est un polyéthylène de moyenne densité (d = 0,954) d'indice de fluidité 20 (ASTM D-1238) commercialisé par la société FINA sous la référence FINATHENE 3802 (marque déposée).

Le polyamide 11 est commercialisé par la société ATOCHEM sous la référence RILSAN BESNO (marque déposée).

Le terpolymère est un terpolymère éthylène (89 % poids)-acrylate d'éthyle (8 % poids) - anhydride maléïque (3 % poids), commercialisé par la société ORKEM (NORSOLOR) sous la référence LOTADER 2200 (marque déposée) ; ses caractéristiques sont les suivantes :

Indice de fluidité = 1 g/10 mn (ASTM D-1238)

indice d'acide = 17 mg KOH/g (Titration)

% poids d'acrylate d'éthyle = 8 (Spectroscopie IR)

Les mélanges de polymères considérés sont extrudés dans les conditions décrites précédemment.

Les résultats obtenus figurent dans le tableau 2 suivant :

Tableau 2

| Références | 1 | 2 | 3 | 4 |
|---|---|---|---|---|
| Perméabilité | | | | |
| $10^{-12}$g/cm.s (n$C_7$ , 50°C) | 12000 | 8 | 1300 | 300 |
| Propriétés mécaniques (tractions statiques à 20°C) | | | | |
| Module (MPa) | 900 | 1200 | 700 | 650 |
| (Contrainte au seuil (MPa) | 17 | 32 | 20 | 20 |
| Contrainte à la rupture (MPa) | 30 | 55 | 14,5 | 32 |
| Allongement à la rupture (%) | 800 | 330 | 100 | 550 |

Il apparait une réduction très importante de la perméabilité en présence de terpolymère (comparaison des mélanges 3 et 4).

On sait d'autre part qu'une mauvaise adhérence entre les phases d'un mélange incompatible de polymères entraine des propriétés à la rupture médiocres. Ainsi, on peut constater que la présence de terpolymère améliore très sensiblement les caractéristiques à la rupture des mélanges polyéthylène-polyamide (comparaison des mélanges 3 et 4) et en conséquence l'adhérence entre les phases présentes dans le mélange.

**Exemple 2**

On présente ci-après, de manière comparative, des essais réalisés avec plusieurs types d'additifs susceptibles d'améliorer l'adhérence entre la phase polyéthylène et la phase polyamide dispersée. Les résultats sont donnés dans le tableau 3.

Le polyéthylène et le polyamide utilisés sont ceux décrits précédemment dans l'exemple 1. Les mélanges 5, 6, 8, 9 et 10 sont présentés à titre de comparaison. Le mélange 5 contient 84 % en poids de polyéthylène et 16 % en poids de polyamide. Pour former les mélanges 6 à 10, on a remplacé dans le mélange 5 une partie (2,5 % en poids) du polyéthylène par :

mélange 6 = un copolymère éthylène (97 % poids)-acide acrylique (3 % poids) commercialisé par la société BASF sous la référence LUCALEN 2731 (marque déposée) ;

mélange 7 = terpolymère selon l'invention, éthylène-ester acrylique-anhydride maléïque déjà décrit pour le mélange 4 ;

mélange 8 = copolymère éthylène-acrylate d'éthyle (17 % poids);

mélange 9 = copolymère éthylène-anhydride maléïque (3 % poids) commercialisé par ORKEM (NORSOLOR) sous la référence LX 8690 (marque déposée) ;

mélange 10 = terpolymère éthylène-acétate de vinyle-acide acrylique constitué de 67 % en poids d'éthylène, de 32 % en poids d'acétate de vinyle et de 1 % en poids d'acide acrylique.

Sur chacun des matériaux provenant des mélanges 5 à 10, on a effectué un test de blanchiment qui permet d'apprécier rapidement la structure de l'alliage. Ce test consiste à plier plusieurs fois un échantillon de l'alliage. L'expérience montre que lorsqu'un blanchiment est observé, il correspond à une morphologie grossière et à des propriétés mécaniques insuffisantes, le blanchiment traduisant une décohésion des phases de l'alliage. Par ailleurs, on a indiqué dans le tableau 3 l'apparition (ou non) d'un délaminage.

Tableau 3

| mélange n° | 5 | 6 | 7 | 8 | 9 | 10 |
|---|---|---|---|---|---|---|
| type additif | / | copolymère éthylène – acide acrylique | terpolymère éthylène – acrylate d'éthyle – anhydride maléïque | copolymère éthylène – acrylate d'éthyle | copolymère éthylène – anhydride maléïque | terpolymère éthylène – acétate vinyle – acide acrylique |
| teneur (% poids) | 0 | 2,5 | 2,5 | 2,5 | 2,5 | 2,5 |
| perméabilié $10^{-12}$ g/cm.s (20°C, n-$C_7$) | 600 | 550 | 150 | 650 | 500 | 570 |
| module (MPa) | 1550 | 1250 | 1250 | 1420 | 1000 | 1300 |
| contrainte au seuil $\sigma_S$ (MPa) | 26 | 26 | 26 | 25 | 27 | 24 |

EP 0 541 527 B1

Tableau 3 (suite)

| mélange n° | 5 | 6 | 7 | 8 | 9 | 10 |
|---|---|---|---|---|---|---|
| contrainte à la rupture $\sigma_R$ (MPa) | 5 | 16 | 35 | 6 | 37 | 4 |
| allongement à la rupture $\sigma_R$ (%) | 300 | 500 | 550 | 270 | 550 | 360 |
| délaminage | oui | oui | non | oui | non | oui |
| blanchiment | oui | oui | non | oui | non | oui |

On a effectué l'analyse morphologique d'échantillons fabriqués à partir des mélanges 5, 6 et 7 ci-dessus. Les échantillons proviennent de tubes extrudés sur une extrudeuse TROESTER (marque déposée) de diamètre 45 mm, à 210°C, avec une vitesse de rotation de vis de 10 tours/mn.

L'analyse morphologique a été réalisée après coloration sélective de la phase polyamide par un métal lourd et analyse des faciès de fracture à froid en microscopie électronique en électrons rétrodiffusés.

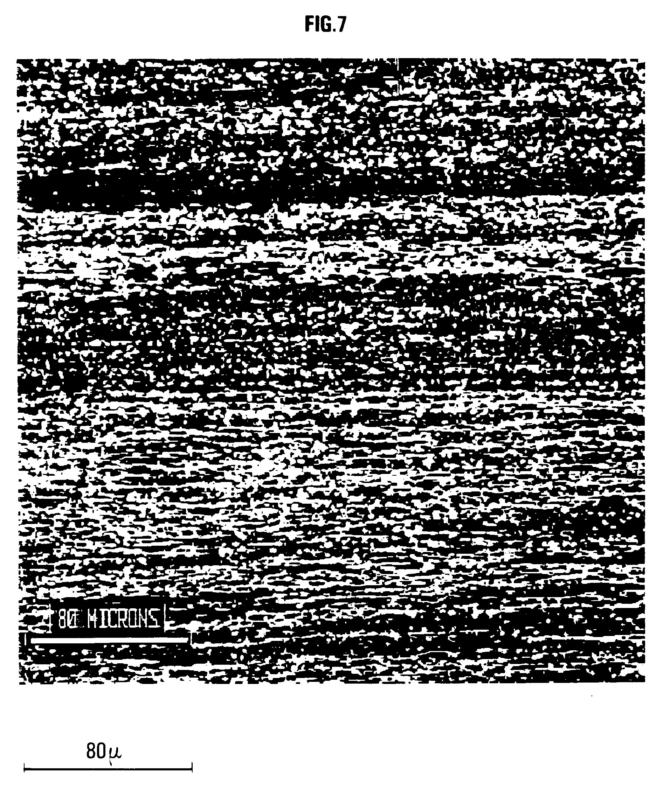

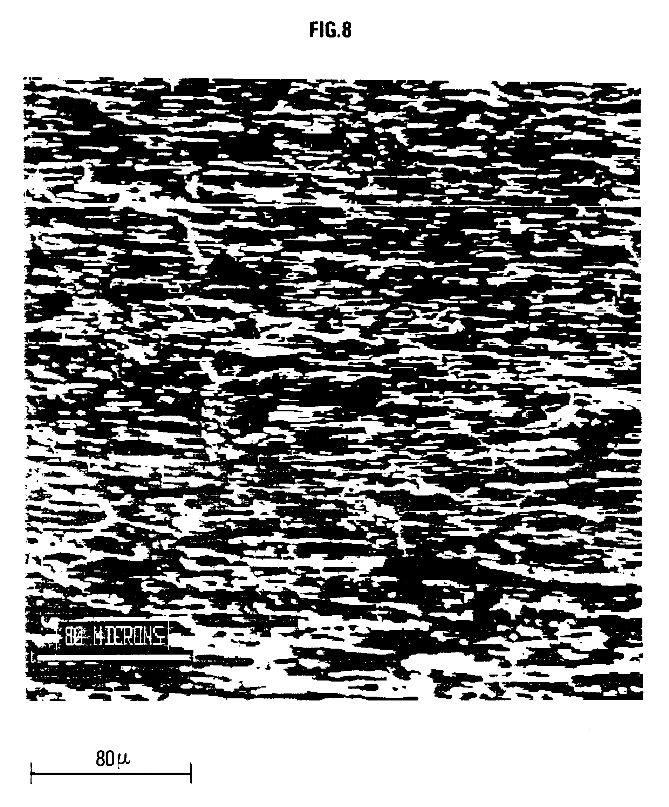

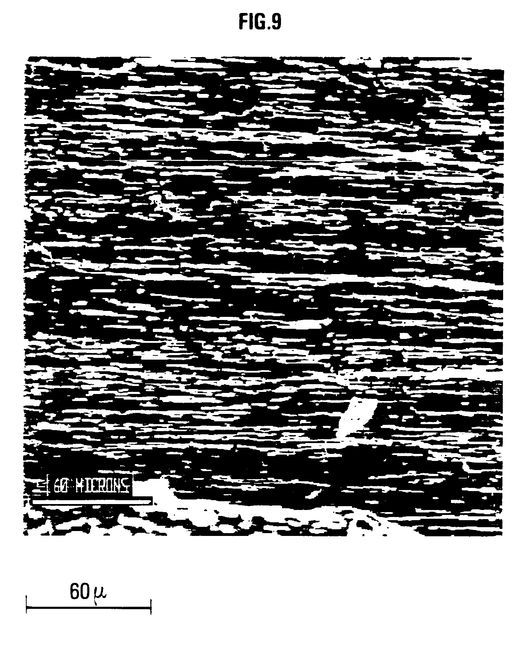

Cette analyse a été réalisée dans les sens transverse et longitudinal à l'aide d'un logiciel TRACOR (marque déposée). Les diamètres de FERET correspondent à la moyenne des plus grandes dimensions des particules élementaires projetées sur les axes OX, OY et OZ, tels que représentés sur la figure 6.

Les résultats obtenus sont présentés dans le tableau 4 ci-après.

Ces paramètres n'ont pas pour objet de décrire finement les morphologies observées, mais simplement de quantifier des différences visibles sur les photos. Le produit de ces trois dimensions donne ce que l'on pourrait considérer comme le volume de la particule moyenne en nombre. Il apparait que ce sont les terpolymères selon l'invention qui réduisent le plus la taille de la dispersion (mélange 7).

Le mélange 5, réalisé en l'absence de co- ou terpolymère a la morphologie la plus grossière et le mélange réalisé en présence du copolymère éthylène-acide acrylique (mélange 6) a une morphologie intermédiaire.

La figure 7 annexée rend compte de la morphologie d'un matériau obtenu à partir de mélange 7 selon l'invention. Les photos 8 et 9 rendent compte de la morphologie des matériaux obtenus à partir des mélanges 5 et 6, respectivement.

## Exemple 3

Les essais rapportés dans cet exemple illustrent par comparaison, pour une même catégorie d'additif, l'influence de la masse moléculaire et de la présence d'une séquence ester acrylique sur les propriétés

Tableau 4

| mélange | teneur PE (% poids) | teneur PA11 (% poids) | type additif | teneur (% poids) | diamètres Feret moyens en | | | produit |
|---|---|---|---|---|---|---|---|---|
| | | | | | X | Y | Z | X Y Z |
| 5 | 84 | 16 | – | 0 | 4,5µm | 4,2µm | 14 µm | 265 µm$^3$ |
| 6 | 81,5 | 16 | copolymère éthylène - acide acrylique | 2,5 % | 3,4µm | 2,8µm | 13µm | 124 µm$^3$ |
| 7 | 81,5 | 16 | copolymère éthylène - acrylate d'éthyle - anhydride maléïque | 2,5 % | 1,9µm | 1,6µm | 2,6µm | 8 µm$^3$ |

mécaniques et la perméabilité (n-$C_7$, 20°C) des mélanges polyéthylène-polyamide décrits.

Les mélanges 7 et 9 ont déjà été décrits dans l'exemple 2.

Pour le mélange 12, on a utilisé un terpolymère éthylène (88 % en poids)-acrylate d'éthyle (9 % en poids)-anhydride maléïque (3 % en poids) ; et pour le mélange 11, un copolymère éthylène (92 % en poids)-acrylate d'éthyle (8 % en poids).

Certaines caractéristiques de ces additifs sont données dans le tableau 5 ci-dessous.

Tableau 5

| mélange n° | 7 | 12 | 9 | 11 |
|---|---|---|---|---|
| indice de fluidité g/10mn (ASTM D-1238) | 1 | 200 | 11 | 11 |
| masse moléculaire en nombre | 12800 | 6200 | 12600 | 13500 |
| masse moléculaire en poids | 72800 | 27350 | 69400 | 75300 |
| indice d'acide mgKOH/g (titration) | 17 | 17 | 18 | 0 |
| annydride maléïque (% poids) | 3 | 3 | 3,4 | 0 |
| acrylate d'éthyle (% poids) | 8 | 9 | 0 | 8 |

La comparaison des mélanges extrudés dans des conditions identiques décrites précédemment et des résultats obtenus sont portés dans le tableau 6 suivant, dans lequel on a rapporté les résultats obtenus avec le polymère n°1.

Tableau 6

| Référence | 1 | 7 | 12 | 9 | 11 |
|---|---|---|---|---|---|
| PE | 100 | 81,5 | 81,5 | 81,5 | 81,5 |
| $PA_{11}$ | 0 | 16 | 16 | 16 | 16 |
| additif | 0 | 2,5 | 2,5 | 2,5 | 2,5 |
| perméabilité | | | | | |
| $10^{-12}$g/cm.s (20°C, $nC_7$) | 1500 | 150 | 500 | 500 | 800 |
| propriétés mécaniques tractions statiques à 20°C | | | | | |
| module (MPa) | 900 | 1250 | 700 | 1000 | 1500 |
| seuil : contrainte (MPa) | 17 | 26 | 18 | 27 | 18 |
| rupture : contrainte (MPa) | 35 | 35 | 30 | 37 | 7 |
| allongement (%) | 800 | 550 | 500 | 550 | 250 |

Il apparait ainsi que le meilleur compromis entre les différentes propriétés testées est atteint avec le terpolymère selon l'invention utilisé dans le mélange 7.

## Exemple 4

Les essais rapportés dans cet exemple illustrent de manière comparative la composition des mélanges en fonction de la teneur en terpolymère selon l'invention . On a rappelé les résultats obtenus avec les mélanges 3 et 4 et le mélange 1. Ces résultats sont portés dans le tableau 7 qui suit.

Tableau 7

| Références | | 3 | 4 | 13 | 14 | 15 | 1 |
|---|---|---|---|---|---|---|---|
| PE | | 79 | 77 | 75 | 73 | 69 | 100 |
| $PA_{11}$ | | 21 | 21 | 21 | 21 | 21 | 0 |
| terpolymère | | 0 | 2 | 4 | 6 | 10 | 0 |
| perméabilité | | | | | | | |
| $10^{-12}$g/cm.s ($nC_7$, 50°C) | | 1300 | 300 | 250 | 800 | 900 | 12000 |
| perméabilités mécaniques (tractions statiques à 20°C) | | | | | | | |
| module (MPa) | | 700 | 650 | 650 | 700 | 800 | 900 |
| seuil : contrainte (MPa) | | 20 | 20,5 | 21,5 | 21 | 21 | 17 |
| rupture : | contrainte (MPa) | 14,5 | 32 | 33 | 31,5 | 30 | 30 |
| | allongement (%) | 100 | 550 | 550 | 550 | 550 | 800 |

Il apparait dans ces conditions qu'il est possible d'incorporer aux mélanges polyéthylène-polyamide une large proportion de terpolymère. Cependant, dans le cadre de l'invention, une forte réduction de perméabilité à 50°C est associée à une faible teneur enterpolymère, ce qui, d'un point de vue économique, est tout à fait satisfaisant. On peut remarquer qu'à ces faibles teneurs en terpolymère, le produit obtenu par mélange possède de bonnes caractéristiques à la rupture.

**Exemple 5**

Les essais rapportés dans cet exemple illustrent de manière comparative la composition des mélanges en fonction de la teneur en polyamide.

On a rappelé les résultats obtenus avec les matériaux référencés 1 et 2. Ces résultats sont portés dans le tableau 8 qui suit. Le mélange 16 est identique au mélange 7 déjà décrit dans l'exemple 2.

Tableau 8

| Références | | 1 | 16 | 17 | 18 | 19 | 2 |
|---|---|---|---|---|---|---|---|
| PE | | 100 | 81,5 | 76,5 | 71,5 | 65 | 0 |
| $PA_{11}$ | | 0 | 16 | 21 | 26 | 32,5 | 100 |
| terpolymère | | 0 | 2,5 | 2,5 | 2,5 | 2,5 | 0 |
| perméabilité | | | | | | | |
| $10^{-12}$g/cm.s ($nC_7$, 50°C) | | 12000 | 1000 | 650 | 100 | 40 | 8 |
| propriétés mécaniques (tractions statiques à 20°C | | | | | | | |
| module (MPa) | | 900 | 1250 | 1100 | 1300 | 1300 | 1200 |
| seuil :contrainte (MPa) | | 17 | 26 | 22,5 | 23,5 | 23,5 | 35 |
| rupture : | contrainte (MPa) | 30 | 35 | 32 | 35 | 32 | 45 |
| | allongement (%) | 800 | 550 | 550 | 500 | 450 | 300 |

La réduction de perméabilité est telle qu'à 32,5 % en poids de polyamide, la perméabilité à 50°C au $nC_7$ est à peine supérieure à celle du polyamide pur dans les mêmes conditions.

Dans tous les cas, on observe que les produits obtenus par mélange, et pour des conditions d'extrusion identiques, conservent de bonnes caractéristiques à la rupture.

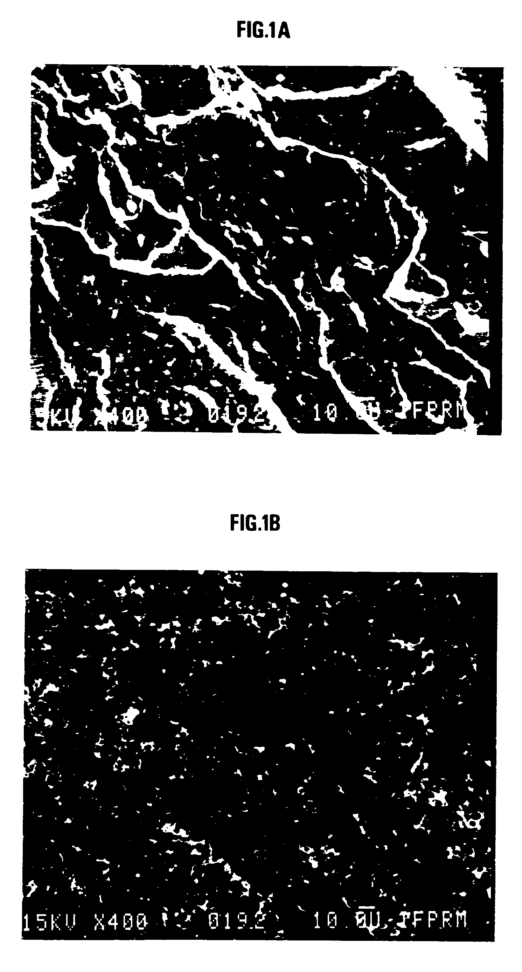

Les figures 1A et 1B sont des microscopies électroniques à balayage d'un échantillon de mélange 19 pour une surface d'observation et un grossissement (X400) identiques. (1A : électrons secondaires SEI ; 1B

: électrons rétrodiffusés : BEI).

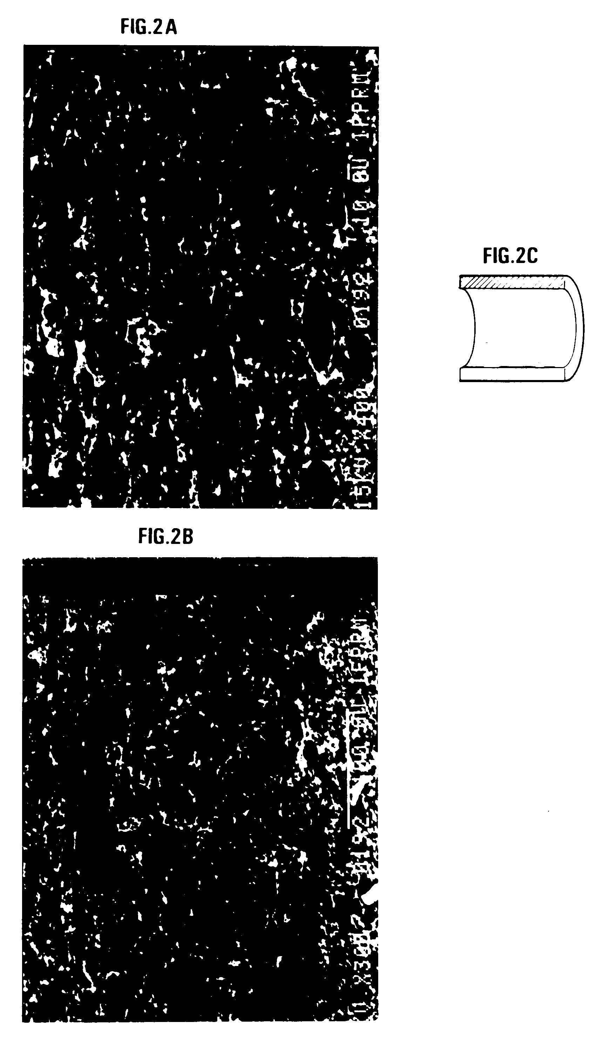

Les figures 2A et 2B sont des microscopies électroniques à balayage (électrons rétrodiffusés) d'un échantillon du mélange 19 prélevé sur un tube dans le sens de l'écoulement et après coloration sélective : polyamide en blanc (2A : GX400 ; 2B : GX300).

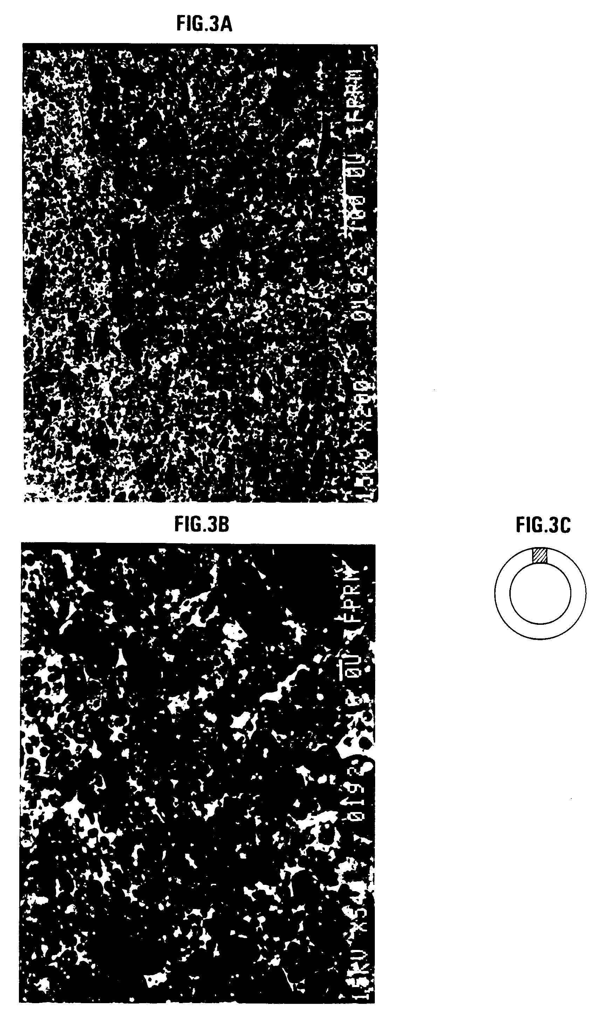

Les figures 3A et 3B sont des microscopies électroniques à balayage (électrons rétrodiffusés : BEI) d'un échantillon du mélange 19 prélevé sur un tube dans le sens perpendiculaire à l'écoulement et après coloration sélective : polyamide en blanc (3A : GX200 ; 3B : GX540).

**Exemple 6**

Les essais rapportés dans cet exemple illustrent le comportement de mélanges selon l'invention (mélanges 23 et 24) et les comparent à celui des produits purs (références 20, 21 et 22), dans le cas de la perméabilité aux essences oxygénées. Les produits 20 et 21 sont respectivement identiques aux produits 1 et 2 de l'exemple 1.

Le carburant utilisé pour ces essais est constitué de 95 % poids d'essence (super) et de 5 % poids de tertiobutylalcool. Les résultats obtenus sont reportés dans le tableau 9 suivant.

Le polyamide noté PA6 dérivant du caprolactame est commercialisé par la société RHONE-POULENC CHIMIE sous la référence C.216 (marque déposée). Ses caractéristiques sont les suivantes :

| densité | $1,14$ g/cm$^3$ |
|---|---|
| T de fusion | $215°$C |
| cristallinité | $26$ % |
| $\overline{M}_n$ | $15600$ g/mole |
| $\overline{M}_p$ | $27500$ g/mole |

Tableau 9

| Références | 20 | 21 | 22 | 23 | 24 |
|---|---|---|---|---|---|
| PE | 100 | 0 | 0 | 65,5 | 65,5 |
| PA$_{11}$ | 0 | 100 | 0 | 32 | 0 |
| PA$_6$ | 0 | 0 | 100 | 0 | 32 |
| terpolymère | 0 | 0 | 0 | 2,5 | 2,5 |
| perméabilité | | | | | |
| $10^{-8}$ g/cm.s (essences oxygénées) ($50°$C) | 5 | 2,5 | 0,30 | 1,5 | 0,15 |

Dans ces conditions, on note une réduction très sensible de la perméabilité aux essences oxygénées à $50°$C des matériaux obtenus par mélange selon l'invention. Dans ce cas, la perméabilité de l'alliage est même inférieure à celle des deux constituants purs : on observe ainsi un effet de synergie.

**Exemple 7**

Les mélanges 25 et 26 ont été extrudés de manière comparative sous forme de tubes de diamètre 45 mm et d'épaisseur variable de 0,5 à 3 mm environ sur une extrudeuse TROESTER équipée d'une filière de tube d'entrefer 3 mm. Le tableau 10 présente les résultats obtenus en perméabilité et propriétés mécaniques en fonction du taux d'élongation qui est défini par la relation :

$$\tau = \frac{V_{tireuse} - V_{filière}}{V_{filière}} \times 100$$

avec $\tau$ taux d'élongation

$V_t$ = vitesse linéaire du tube en sortie de filière

$V_f$ = vitesse linéaire du tube en sortie de tireuse.

Le polyéthylène (65 % poids) et le polyamide (32,5 % poids) utilisés sont ceux décrits dans l'exemple 1. Le copolymère ajouté dans le mélange 26 (2,5 % en poids) est composé d'éthylène (97 % poids) et d'acide acrylique (3 % poids). Il est analogue à celui utilisé dans le mélange 6. Le terpolymère du mélange 25 (2,5 % en poids) est celui décrit pour le mélange 4 selon l'invention.

Il apparait clairement que les compositions selon l'invention sont beaucoup moins sensibles aux conditions d'étirage de la matière fondue. De plus, même pour des taux d'étirage inférieurs à 100 %, la perméabilité est réduite de manière significative.

On observe également une relation entre la morphologie et les propriétés mécaniques ; en effet, pour les faibles taux d'étirage, les terpolymères selon l'invention conduisent à un niveau de propriétés mécaniques satisfaisant, alors que sans l'effet de l'orientation, les grosses particules produites avec le copolymère éthylène-acide acrylique fragilisent le matériau obtenu.

## Exemple 8

Dans cet exemple, un polyéthylène commercialisé par FINA sous la référence MS 201 B (65,5 % en poids par rapport au poids total du mélange) est associé à un copolymère éthylène-alcool vinylique contenant 20 % en poids d'éthylène, commercialisé par SOLVAY sous la référence CLARENE L (32 % en poids dans le mélange) en présence d'un terpolymère selon l'invention (2,5 % en poids dans le mélange) contenant 89 % en poids d'éthylène, 8 % en poids d'acrylate d'éthyle et 3 % en poids d'anhydride maléïque (mélange 27).

Un tube est fabriqué dans les conditions classiques sur une extrudeuse TROESTER de diamètre 45 mm, équipée d'une filière à tube et suivie d'un bac de calibrage sous vide, comme dans les exemples précédents. La vitesse de rotation de la vis est de 10 t/min, le débit de 130g/min, la température en filière de 260°C et le tube a un diamètre extérieur de 40 mm pour un taux d'étirage de 80 % tel que défini précédemment.

Les propriétés mesurées sur le tube sont décrites dans le tableau 11 suivant et comparées à celles des produits de base purs.

produit 28 : polyéthylène

produit 29 : copolymère éthylène-alcool vinylique.

| mélange | | | taux d'élongation (%) | perméabilité nC$_7$ 20°C (10$^{-10}$ g/cm.s) | module (MPa) | contrainte $\sigma_S$ au seuil (MPa) | contrainte $\sigma_R$ à la rupture (MPa) | allongement $\varepsilon_R$ à la rupture (%) | blanchiment |
|---|---|---|---|---|---|---|---|---|---|
| | | PE 65 % | 60 % | 3,7 | 1080 | 22 | 26 | 430 | non |
| | | PA$_{11}$ 32,5 % | 140 % | 2,1 | 1187 | 20 | 32 | 441 | non |
| | | terpolymère 2,5 % | 250 % | 1,5 | 900 | 20 | 38 | 457 | non |
| 25 | | | 310 % | 1,2 | 950 | 21 | 36 | 410 | non |
| | | | 560 % | 0,7 | 1100 | 22 | 35 | 470 | non |
| | | | 600 % | 1 | 800 | 18 | 37 | 400 | non |
| | | | 800 % | 1,1 | 970 | 19 | 35 | 430 | non |
| | | PE 65 % | 60 % | 9,8 | 1050 | 17 | 12 | 230 | oui |
| 26 | | PA$_{11}$ 32,5 % | 110 % | 4,4 | 930 | 20 | 26 | 450 | oui |
| | | copolymère éthylène – | 220 % | 2,3 | 1120 | 18 | 24 | 430 | oui |
| | | acide acrylique 2,5 % | 450 % | rupture du tube à étirage à chaud | | | | | |

Tableau 10

EP 0 541 527 B1

Tableau 11

| Référence | 27 | 28 | 29 |
|---|---|---|---|
| Perméabilité $nC_7$ 50°C ($10^{-12}$ g/cm.s) | 11500 | 0 | 0 |
| Traction | | | |
| module (MPa) | 900 | 860 | 4500 |
| contrainte seuil (MPa) | 28 | 30 | 55 |
| allongement seuil (MPa) | 8 | 8 | 14 |
| contrainte rupture (MPa) | 33 | 20 | 51 |
| allongement rupture (%) | 850 | 50 | 40 |

La perméabilité du mélange 27 au $nC_7$ à 50°C après 6 mois d'essai n'est toujours pas mesurable, ce qui illustre bien l'efficacité des mélanges selon l'invention mis en oeuvre par extrusion dans des conditions usuelles.

**Revendications**

1. Composition de polymères thermoplastiques, caractérisée en ce qu'elle comprend au moins une polyoléfine, au moins un polymère oxygéné incompatible choisi parmi les polyamides, les copolyamides, les alcools polyvinyliques et les copolymères éthylène-alcool vinylique et en proportion mineure, au moins un terpolymère comprenant
   - de 64 à 94% en poids de motifs dérivant de l'éthylène;
   - de 5 à 35% en poids de motifs dérivant d'au moins un ester d'acide acrylique ou méthacrylique;
   - et de 1 à 5% en poids de motifs dérivant de l'anhydride maléique.

2. Composition selon la revendication 1, caractérisée en ce que ladite polyoléfine représente de 50 à 89,5% en poids, ledit polymère oxygéné incompatible de 10 à 40% en poids et ledit terpolymère de 0,5 à 10% en poids de ladite composition.

3. Composition selon la revendication 2, caractérisée en ce que ladite polyoléfine représente de 65 à 84,5% en poids, ledit polymère oxygéné incompatible de 15 à 30% en poids et ledit terpolymère de 0,5 à 5% en poids de ladite composition.

4. Composition selon la revendication 1 à 3, caractérisée en ce que ladite polyoléfine est choisie parmi les polyéthylènes et les copolymères contenant au moins 90% de motifs éthylène et 10% au plus de motifs dérivant d'au moins une oléfine de $C_3$ à $C_8$, présente une densité de 0,90 à 0,97 et un indice de fusion défini par la norme ASTM D-1238 de 0,2 à 100 (mesuré sous 1,96 kg à 190°C).

5. Composition selon la revendication 4, caractérisée en ce que ladite polyoléfine est un polyéthylène.

6. Composition selon l'une des revendications 1 à 5, caractérisée en ce que ledit polymère oxygéné incompatible est un polyamide choisi parmi les polyamides 4 à 12 et les polyamides 6-6, 5-6, 4-10, 5-10 et 6-10.

7. Composition selon la revendication 6, caractérisée en ce que ledit polyamide est un polyamide 6, provenant du caprolactame, ou un polyamide 11, provenant de l'acide amino-undécanoque.

8. Composition selon l'une des revendications 1 à 5, caractérisée en ce que ledit polymère oxygéné incompatible est un alcool polyvinylique dérivant par hydrolyse à 80-99,8% d'un homopolymère d'acétate de vinyle.

9. Composition selon l'une des revendications 1 à 5, caractérisée en ce que ledit polymère oxygéné incompatible est un copolymère éthylène-alcool vinylique dérivant par hydrolyse d'un compolymère éthylène-acétate de vinyle, et ayant un pourcentage en poids d'éthylène inférieur à 30% et un indice de fluidité défini par la norme ASTM D-1238 de 1 à 5 (mesuré sous 1,96 kg à 190°C).

16

**10.** Composition selon l'une des revendications 6 et 7, caractérisée en ce que ledit terpolymère contenant environ 3% en poids de motifs dérivant de l'anhydride maléique représente de 12 à 15% en poids par rapport au polyamide.

**11.** Composition selon l'une des revendications 1 à 10, caractérisée en ce que ledit terpolymère a une masse moléculaire moyenne en nombre de 3000 à 50000.

**12.** Composition selon l'une des revendications 1 à 11, caractérisée en ce qu'elle est mise en oeuvre par extrusion, extrusion-soufflage ou injection.

**13.** Utilisation d'une composition selon la revendication 12, sous la forme de tubes, de réservoirs, de feuilles ou de films.

**Claims**

**1.** A composition of thermoplastic polymers, characterized in that it comprises at least one polyolefin, at least one incompatible oxygen-containing polymer selected from polyamides, copolyamides, polyvinyl alcohols and ethylene-vinyl alcohol copolymers and, in a minor proportion, at lesat one terpolymer comprising
- from 64 to 94% by weight of units derived from ethylene;
- from 5 to 35% by weight of units derived from at least one acrylic or methacrylic acid ester;
- and from 1 to 5% by weight of units derived from maleic anhydride.

**2.** A composition according to claim 1, characterized in that said polyolefin represents from 50 to 89.5% by weight, said incompatible oxygen-containing polymer from 10 to 40% by weight and said terpolymer from 0.5 to 10% by weight of said composition.

**3.** A composition according to claim 2, characterized in that said polyolefin represents from 65 to 84.5% by weight, said incompatible oxygen-containing polymer from 15 to 30% by weight and said terpolymer from 0.5 to 5% by weight of said composition.

**4.** A composition according to one of claims 1 to 3, characterized in that said polyolefin is selected from polyethylenes and copolymers containing at least 90% of ethylene units and at most 10% of units derived from at least one $C_3$-$C_8$ olefin, has a density of 0.90 to 0.97 and a melt index, defined by ASTM D.1238 Standard, from 0.2 to 100 (as measured under 1.96 kg at 190°C).

**5.** A composition according to claim 4, characterized in that said polyolefin is a polyethylene.

**6.** A composition according to one of claims 1 to 5, characterized in that said incompatible oxygen-containing polymer is a polyamide selected from the 4 to 12 polyamides and the 6-6, 5-6, 4-10, 5-10 and 6-10 polyamides.

**7.** A composition according to claim 6, characterized in that said polyamide is a 6-polyamide, derived from caprolactam or a 11-polyamide, derived from undecanoic acid.

**8.** A composition according to one of claims 1 to 5, characterized in that said incompatible oxygen-containing polymer is a polyvinyl alcohol derived from a vinyl acetate homopolymer, by hydrolysis at 80-99.8%.

**9.** A composition according to one of claims 1 to 5, characterized in that said incompatible oxygen-containing polymer derived by hydrolysis of an ethylene-vinyl actetate copolymer and having an ethylene weight percentage lower than 30% and a melt index, defined by ASTM D-1238 from 1 to 5 (as measured under 1.96 kg at 190°C).

**10.** A composition according to one of claims 6 and 7, characterized in that said terpolymer containing about 3% by weight of units derived from maleic anhydride represents from 12 to 15% by weight with respect to the polyamide.

11. A composition according to one of claims 1 to 10, characterized in that said terpolymer has a number average molecular weight of from 3000 to 50,000.

12. A composition according to one of claims 1 to 11, characterized in that it is shaped by extrusion, extrusion-blowing or injection.

13. The use of a composition according to claim 12, in the shape of tubes, tanks, foils or films.

**Patentansprüche**

1. Thermoplastische Polymerzusammensetzung, dadurch gekennzeichnet, daß sie wenigstens ein Polyolefin, wenigstens ein nicht kompatibles sauerstoffhaltiges Polymer, das aus Polyamiden, Copolyamiden, Polyvinylalkoholen und Ethylen-Vinylalkohol-Copolymeren ausgewählt ist, und in geringerem Maße wenigstens ein Terpolymer umfaßt, das
   - 64 bis 94 Gew.% von aus Ethylen abgeleiteten Einheiten,
   - 5 bis 35 Gew.% Einheiten, die wenigstens von einem Acrylsäure- oder Methacrylsäureester abgeleitet sind,
   - und 1 bis 5 Gew.% von aus Maleinsäureanhydrid abgeleiteten Einheiten,
   umfaßt.

2. Zusammensetzung nach Anspruch 1, dadurch gekennzeichnet, daß das Polyolefin 50 bis 89,5 Gew.%, das nicht kompatible sauerstoffhaltige Polymer 10 bis 40 Gew.% und das Terpolymer 0,5 bis 10 Gew.% der Zusammensetzung darstellt.

3. Zusammensetzung nach Anspruch 2, dadurch gekennzeichnet, daß das Polyolefin 65 bis 84,5 Gew.%, das nicht kompatible sauerstoffhaltige Polymer 15 bis 30 Gew. % und das Terpolymer 0,5 bis 5 Gew.% der Zusammensetzung darstellt.

4. Zusammensetzung nach Anspruch 1 bis 3, dadurch gekennzeichnet, daß das Polyolefin aus den Polyethylenen und den Copolymeren, die wenigstens 90 % Ethyleneinheiten und höchstens 10 % Einheiten, die von wenigstens einem $C_3$- bis $C_8$-Olefin abgeleitet sind, ausgewählt ist, eine Dichte von 0,90 bis 0,97 und einen durch die ASTM D-1238-Norm definierten Schmelzindex von 0,2 bis 100 (gemessen unter 1,96 kg bei 190°C) zeigt.

5. Zusammensetzung nach Anspruch 4, dadurch gekennzeichnet, daß das Polyolefin ein Polyethylen ist.

6. Zusammensetzung nach einem der Ansprüche 1 bis 5, dadurch gekennzeichnet, daß das nicht kompatible sauerstoffhaltige Polymer ein Polyamid ist, das aus den Polyamiden 4 bis 12 und den Polyamiden 6-6, 5-6, 5-10 und 6-10 ausgewählt ist.

7. Zusammensetzung nach Anspruch 6, dadurch gekennzeichnet, daß das Polyamid ein Polyamid 6, abgeleitet von Caprolactam, oder ein Polyamid 11, abgeleitet von Aminoundecansäure, ist.

8. Zusammensetzung nach einem der Ansprüche 1 bis 5, dadurch gekennzeichnet, daß das nicht kompatible sauerstoffhaltige Polymer ein Polyvinylalkohol ist, der durch Hydrolyse auf 80 bis 99,8 % von einem Vinylacetat-Homopolymer abgeleitet ist.

9. Zusammensetzung nach einem der Ansprüche 1 bis 5, dadurch gekennzeichnet, daß das nicht kompatible sauerstoffhaltige Polymer ein Ethylen-Vinylalkohol-Copolymer ist, das durch Hydrolyse eines Ethylen-Vinylacetat-Copolymers abgeleitet und weniger als 30 Gew.% Ethylen und eine durch die ASTM D-1238-Norm definierte Fließzahl von 1 bis 5 (gemessen unter 1,96 kg bei 190°C) aufweist.

10. Zusammensetzung nach einem der Ansprüche 6 und 7, dadurch gekennzeichnet, daß das Terpolymer, das etwa 3 Gew.% von aus Maleinsäureanhydrid abgeleitete Einheiten enthält, 12 bis 15 Gew.%, bezogen auf das Polyamid, darstellt.

11. Zusammensetzung nach einem der Ansprüche 1 bis 10, dadurch gekennzeichnet, daß das Terpolymer eine zahlenmittlere Molekularmasse von 3.0000 bis 50.000 besitzt.

**12.** Zusammensetzung nach einem der Ansprüche 1 bis 11, dadurch gekennzeichnet, daß sie durch Extrusion, Extrusionsblasen oder Injektion verarbeitet wird.

**13.** Verwendung einer Zusammensetzung nach Anspruch 12 in Form von Schläuchen, Behältern, Folien oder Filmen.

## FIG.1A

## FIG.1B

**FIG.2A**

**FIG.2C**

**FIG.2B**

**FIG.3A**

**FIG.3B**

**FIG.3C**

**FIG.4A**

**FIG.4B**

**FIG.5**

**FIG.6**

**FIG.7**

80 MICRONS

$80\mu$

## FIG.8

80μ

FIG.9

60 μ